# EUROPÄISCHE PATENTSCHRIFT

(11) **EP 0 821 088 B1**
(45) Veröffentlichungstag und Bekanntmachung des Hinweises auf die Patenterteilung: **08.11.2000**
(21) Anmeldenummer: 97111610.8
(22) Anmeldetag: 09.07.1997
(51) Int. Cl.: D01H 4/12, F16C 32/06

(54) **Offenend-Spinnvorrichtung**
Open-end spinning device
Métier à filer à bout ouvert

(30) Priorität: 27.07.1996 DE 19630476
(43) Veröffentlichungstag der Anmeldung: 28.01.1998
(73) Patentinhaber: Rieter Ingolstadt Spinnereimaschinenbau AG, 85055 Ingolstadt (DE)
(72) Erfinder: Bock, Erich, 85139 Wettstetten (DE); Knabel, Manfred, 85055 Ingolstadt (DE); Schuller, Edmund, 85055 Ingolstadt (DE)

(56) Entgegenhaltungen:
- EP-A- 0 435 016
- WO-A-95/18312
- PATENT ABSTRACTS OF JAPAN vol. 013, no. 100 (M-805), 9.März 1989 & JP 63 289313 A (KOMORI PRINTING MACH CO LTD), 25.November 1988,

## Beschreibung

Die Erfindung betrifft eine Offenend-Spinnvorrichtung mit einem Spinnrotor gemäß dem Oberbegriff des Patentanspruchs 1.

Aus der EP 0 435 016 A2 ist eine gattungsgemäße Offenend-Spinnvorrichtung bekannt, bei der der Spinnrotor in Stützscheiben gelagert wird und wo auf den Spinnrotor eine axiale Kraft über die Stützscheiben ausgeübt wird, wobei sich der Spinnrotor über seinen Schaft axial an einem aerostatischen Axiallager abstützt. Dieses besitzt eine Lagerplatte, die zusammen mit dem Ende des Rotorschaftes eine reibungsarme Werkstoffpaarung ergibt. Der Luftaustritt in den Lagerspalt erfolgt dabei aus der Lagerplatte, wodurch sich ein Luftpolster zwischen dem Rotorschaft und der Lagerplatte bildet. Im Normalbetrieb erfolgt zwischen Rotorschaft und Lagerplatte keine Berührung, so daß an sich ein verschleißfreies Axiallager vorliegt. Beim Betrieb von Offenend-Spinnrotoren treten jedoch zeitweise derart rauhe Betriebsbedingungen auf, z.B. durch Unwucht im Spinnrotor, daß eine Berührung zwischen dem Schaftende und der Lagerplatte erfolgt. Diese Berührung bedeutet zwar bei der bekannten Offenend-Spinnvorrichtung keineswegs, daß das aerostatische Lager beschädigt wird, da bei dem bekannten Axiallager eine reibungsarme Werkstoffpaarung zwischen Rotorschaft und Lagerplatte eingesetzt wird. Außerdem ist die Lagerplatte so ausgebildet, daß sie bei Überlastung des Axiallagers verschleißen kann, so daß es nicht zu einer schnellen Zerstörung des Lagers kommt. Weniger problematisch ist der Verschleiß der Lagerplatte des Axiallagers, vielmehr ist es wichtig, daß der Spinnrotor, d.h. insbesondere seine axiale Lagerfläche durch den Verschleiß des Axiallagers nicht selbst in Mitleidenschaft gezogen wird. Dies würde nämlich bedeuten, daß praktisch ein neuer Spinnrotor eingesetzt werden muß, da der Spinnrotor dann keine geeignete Lagerfläche mehr besitzt und ein Nacharbeiten der Lagerfläche aus Kostengründen und technischen Gründen nur mit sehr großem Aufwand möglich ist. Eine Beschädigung tritt insbesondere dann ein, wenn die Lagerplatte des Axiallagers, die aus einem verschleißfähigen Kohlenstoffwerkstoff ausgebildet ist, abgenutzt ist und der Rotorschaft dann in Berührung mit anderen Bauteilen des Axiallagers kommt oder evtl. mit einer Drosselvorrichtung, die meist aus einem metallischen Sinterwerkstoff besteht. Zwar ist der Spinnbetrieb mit einem stark verschlissenen oder beschädigten Axiallager kaum mehr möglich, da die Fasern nicht mehr korrekt in den Spinnrotor eingespeist werden können. Trotzdem kommt es in der Praxis vor, daß Spinnrotoren zusammen mit einem bereits stark verschlissenen Axiallagers weiter in Betrieb gehalten werden, da nicht erkannt wird, daß das Axiallager verschlissen ist. Aus der EP 0 190 440 A2 ist ebenfalls eine gattungsgemäße Offenend-Spinnvorrichtung bekannt, bei der sich der Spinnrotor axial an einem aerostatischen Axiallager abstützt. Da es sich hierbei um einen schaftlosen Spinnrotor handelt, stützt sich dieser direkt an seinem Axiallager ab. Die Lagerplatte ist hier ringfvrmig ausgebildet, da im Zentrum ein Magnet angeordnet ist, wodurch eine axial wirkenden Kraft auf den Spinnrotor ausgeübt wird. Über die Lagerplatte wird Druckluft in den Lagerspalt zwischen Spinnrotor und Lagerplatte gebracht. Eine über einen zulässigen Wert verschlissene Lagerplatte kann hier ebenfalls zur Beschädigung oder Zerstörung des Spinnrotors oder sogar seines Antriebs führen.

Aufgabe der vorliegenden Erfindung ist es, eine Offenend-Spinnvorrichtung der eingangs genannten Art derart auszubilden, daß der Verschleiß der Lagerplatte erkennbar gemacht wird, so daß eine Beschädigung des Spinnrotors vermieden werden kann. Diese Aufgabe wird erfindungsgemäß durch die Merkmale des Patentanspruchs 1 gelöst.

Durch die erfindungsgemäße Ausgestaltung der Offenend-Spinnvorrichtung, wo an der Lagerplatte des Axiallagers eine Verschleißanzeige angebracht ist, wird die Wartung des Axiallagers wesentlich verbessert. Durch die Verschleißanzeige ist es dem Wartungspersonal überhaupt erst möglich, bei routinemäßigen Eingriffen an der Spinnvorrichtung, z. B. Auswechseln des Rotors, auch den Zustand des Axiallagers zu überprüfen. Das Axiallager ist in der Regel in der Offenend-Spinnvorrichtung schwer zugänglich und einsehbar, so daß eine Wartungsperson nur durch eine deutliche Veränderung am Axiallager eine Veränderung dessen Zustandes erkennen kann. Besonders vorteilhaft ist die Verschleißanzeige dabei als optisch wirkende Verschleißanzeige ausgebildet, die in der Lauffläche des Axiallagers integriert ist. Die Lauffläche ist von der Wartungsperson praktisch als einziges Teil des Axiallagers ohne große Eingriffe an der Spinnvorrichtung einsehbar. Durch Entfernen des Offenend-Spinnrotors ist die Lauffläche und deren Zustand erkennbar. Besonders vorteilhaft wird die Verschleißanzeige in Form einer Bohrung in der Lagerplatte ausgebildet, weil dadurch auf besonders einfache Weise möglich ist, eine deutliche Veränderung der Lagerfläche der Lagerplatte zu erreichen, wenn deren Oberfläche durch Verschleiß abgetragen ist. Besonders vorteilhaft wird die Bohrung als eine Sacklochbohrung ausgeführt, deren offenes Ende dem Spinnrotor zugewandt ist. Nach Entfernen des Schaftes des Spinnrotor aus der Offenend-Spinnvorrichtung kann dann optisch einfach kontrolliert werden, ob noch eine Bohrung in der Lagerplatte zu sehen ist. Ist dies der Fall, so kann der bis dahin aufgetretene Verschleiß noch toleriert werden. Ist jedoch im anderen Fall die Lagerfläche der Lagerplatte eben, bedeutet dies, daß der Materialabtrag so weit fortgeschritten ist, daß die ursprünglich in die Lagerplatte eingebrachte Sacklochbohrung durch Abtrag ihres umgebenden Materials verschwunden ist. Die Tiefe der Sacklochbohrung stellt also ein Maß für den zulässigen Materialabtrag durch Verschleiß dar. Ist die Sacklochbohrung nicht mehr zu erkennen, ist die Verschleißgrenze des Lagers erreicht. In einer weiteren vorteilhaften Ausgestaltung der Erfindung ist vorgesehen, eine Bohrung von der entgegengesetzten Seite in die Lagerplatte einzuarbeiten. In diesem Fall ist die Verschleißgrenze dann erreicht, wenn eine Bohrung in der Lagerplatte sichtbar wird, dann ist so viel Material abgetragen, daß das Axiallager ausgetauscht werden muß. In diesem Fall bildet nicht die Tiefe der Bohrung ein Maß für den zulässigen Verschleiß des Lagers, sondern die zwischen Bohrung und Lagerfläche der Lagerplatte ursprünglich vorhandene Materialdicke. Die Verschleißanzeige in Form einer Bohrung wird besonders vorteilhaft mit einem Bohrungsdurchmesser zwischen 0,5 mm und 1,5 mm, vorzugsweise 1,0 mm, ausgestaltet. Dadurch wird erreicht, daß die Verschleißanzeige deutlich sichtbar ist und diese trotzdem nur ein geringes Luftvolumen beherbergt, so daß das Lager die geforderte Steifigkeit aufweist. In einer anderen vorteilhaften Ausgestaltung der Erfindung ist die Verschleißanzeige in Form eines Ansatzes ausgebildet, dessen dem Spinnrotor zugewandte Seite mit diesem zusammenarbeitet. Der Ansatz besitzt in axialer Richtung eine vorgegebene Länge. Vorteilhafterweise besitzt er einen geringeren Durchmesser als der Teil des Axiallagers, auf dem er angeordnet ist. Bei dieser Ausgestaltung der Erfindung wird erreicht, daß die Anzeige besonders deutlich sichtbar ist, da dann, nachdem der Ansatz durch Verschleiß abgetragen ist, die Fläche der Lagerplatte eine einzige großflächige Ebene bildet. Bei einer weiteren vorteilhaften Ausgestaltung der Erfindung wird die Lagerplatte mit einer Dicke von mehr als 2 mm ausgebildet. Dadurch wird erreicht, daß sie mechanisch stabil ist und im übrigen genügend Material besitzt, um zu verschleißen, ohne daß gleich ein Schaden entsteht. Besonders vorteilhaft ist die Dicke zwischen 2,5 mm und 4 mm ausgestaltet. In einer weiteren günstigen Ausgestaltung der Erfindung ist die Lagerplatte aus einem Material ausgebildet, das für Luft durchlässig ist, so daß keine Luftführungsbohrungen erforderlich sind, die die Luft in den Lagerspalt gelangen lassen. Vielmehr tritt die Luft auf der gesamten Fläche aus der Lagerplatte aus. Vorteilhaft ist, daß die Lagerplatte gleichzeitig als Drosselvorrichtung für die Druckluft ausgebildet ist, so daß das Lager steif genug ist. Bei einer anderen vorteilhaften Weiterbildung der Erfindung besitzt die Lagerplatte Bohrungen, die auf der dem Spinnrotor abgewandten Seite angeordnet sind. Die Bohrungen dienen dazu, die Druckluft, an die sie angeschlossen sind, bis in Nähe der Austrittsfläche aus der Lagerplatte zu führen. Durch diese Bohrungen wird erreicht, daß die Lagerplatte auch in axialer Richtung sehr groß ausgebildet werden kann, so daß sie stabil genug ist, um in eine Halterung eingepreßt werden zu können. Gleichzeitig bieten die Bohrungen den Vorteil, daß die Luft nicht durch die gesamte axiale Länge der Lagerplatte hindurchtreten muß. Dadurch wird erreicht, daß die Drosselwirkung einer massiven Lagerplatte nicht zu groß ist, so daß der Luftaustritt in den Lagerspalt nicht behindert wird.

Im folgenden wird die Erfindung anhand von zeichnerischen Darstellungen beschrieben. Es zeigen:
- **Figur 1**: eine erfindungsgemäße Offenend-Spinnvorrichtung im Schnitt;
- **Figur 2**: ein in einer Halterung angeordnetes erfindungsgemäß ausgestaltetes Axiallager;
- **Figur 3**: ein Axiallager ähnlich Figur 2 mit einer abgewandelten Lagerplatte;
- **Figur 4**: ein Axiallager mit einer alternativ ausgestalteten Verschleißanzeige;
- **Figur 5a**: eine Draufsicht auf die dem Spinnrotor abgewandte Seite einer Lagerplatte;
- **Figur 5b**: die Seitenansicht der Lagerplatte von Figur 5a im Schnitt;
- **Figur 6a**: eine Draufsicht auf die dem Spinnrotor abgewandte Seite einer Lagerplatte;
- **Figur 6b**: die Seitenansicht der Lagerplatte von Figur 6a im Schnitt.

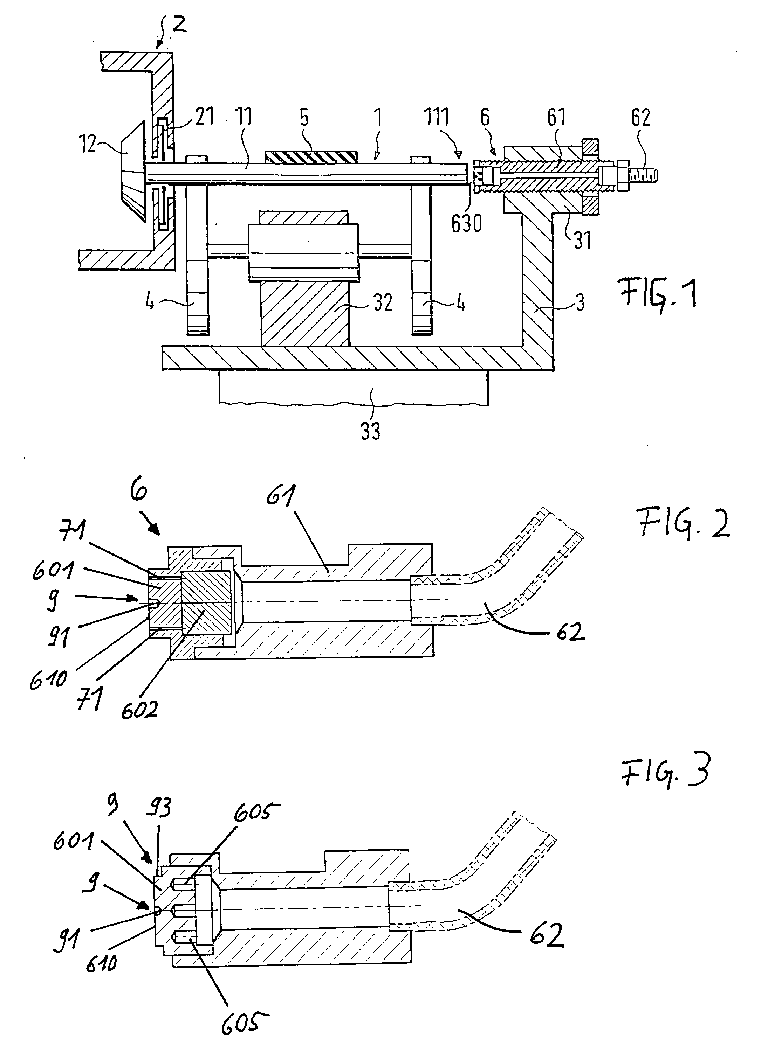

In Figur 1 ist eine erfindungsgemäß ausgestaltete Offenend-Spinnvorrichtung im Schnitt gezeigt. Beispielhaft wird dabei eine solche beschrieben, bei der der Spinnrotor über einen Schaft gelagert ist. Die wesentlichen Bestandteile einer solchen Offenend-Spinnvorrichtung sind der Spinnrotor 1 mit seinem Schaft 11 und dem Rotorteller 12, das Rotorgehäuse 2 mit der Rotorgehäusedichtung 21, der Lagerbock 3, mit einer Lageraufnahme 31 für das Axiallager 6 und einer Aufnahme 32 für die Lagerungen der Stützscheiben 4, die Stützscheiben 4 zur Aufnahme des Rotorschaftes, das Antriebsmittel 5, ein Tangentialriemen, zum Antrieb des Spinnrotors 1 und das Axiallager 6 zur axialen Abstützung des Rotorschaftes 11. Der Rotorschaft 11 reicht mit seinem den Rotorteller 12 tragenden Ende durch die Rotorgehäusedichtung 21 hindurch in das Rotorgehäuse 2.

Das Axiallager 6 ist in einer Halterung 61 gehalten, die bei Figur 1 als Stellschraube ausgebildet ist. Das Axiallager 6 liegt dem freien Ende 111 des Rotorschaftes 11 gegenüber. Die Lageraufnahme 31 besitzt dazu eine Bohrung mit einem Gewinde, in das die Stellschraube axial einjustierbar eingeschraubt ist. Zur Fixierung dient eine Kontermutter. An dem dem Axiallager abgewandten Ende der Stellschraube ist der Anschluß 62 für die Zuführung der Druckluft zum Axiallager 6 angeordnet. Zwischen dem Axiallager 6 und dem Schaftende 111 erstreckt sich der Lagerspalt 630. Auf gattungsgemäße Offenend-Spinnvorrichtungen wird in bekannter Weise eine axiale Kraft aufgebracht, die sich hier über das freie Ende 111 des Rotorschaftes 11 abstützt. Die axiale Kraft auf dem Rotorschaft wird dabei durch schiefgestellte Stützscheiben 4 aufgebracht. Ebensogut ist es aber auch möglich, die axiale Kraftkomponente z.B. über einen schräg zum Rotorschaft verlaufenden Antriebsriemen oder auch eine schräg gestellte Andrück- oder Treibscheibe oder auch über magnetische Kräfte aufzubringen. Die Offenend-Spinnvorrichtung ist auf einem Träger 33, der Teil der dazugehörigen Spinnmaschine ist, befestigt.

Figur 2 zeigt eine Ausführungsform des erfindungsgemäß ausgebildeten Axiallagers 6, das in einer Halterung 61 gehalten ist, im Schnitt. An seiner dem Axiallager 6 abgewandten Seite besitzt die Halterung 61 einen Anschluß 62 für Druckluft. Über ihre gesamte Länge hat die Halterung 61 eine zentrisch angeordnete Bohrung, durch die die Luft bis zum Axiallager 6 strömt. Das Axiallager 6 besteht bei der Ausführungsform von Figur 2 aus der Lagerplatte 601, die mehrere Bohrungen 71 besitzt, durch die die Luft in den Lagerspalt gelangt. Den Bohrungen 71 ist eine Drossel 602 vorgeordnet, durch die der Luftdurchsatz gesteuert wird. In der Lauffläche 610 des Axiallagers 6 ist zentrisch eine Sacklochbohrung 91 angebracht, die die Verschleißanzeige 9 darstellt. Die Tiefe der Sacklochbohrung beträgt 0,5 mm, ihr Durchmesser 1,0 mm. Die Lagerplatte 601 besteht aus einem Kohlenstoffwerkstoff, der verschleißfähig ist. Bei Berührung durch den Schaft 11 der Offenend-Spinnvorrichtung tritt an der Lagerplatte 601 Verschleiß auf, der dazu führt, daß das über den Grund der Sacklochbohrung überstehende Material abgetragen wird. Wenn der Abtrag so groß ist, wie die Sacklochbohrung 91 tief ist, entsteht eine Lagerplatte 601, die im Zentrum eine glatte Fläche darstellt, da die Sacklochbohrung 91 verschwunden ist. Dies ist ein Signal für die Wartungsperson das Axiallager 6 gegen ein neues auszutauschen.

Figur 3 zeigt eine Halterung 61 mit einem Axiallager 6 ähnlich dem von Figur 2, allerdings ist die Halterung nicht als Stellschraube ausgebildet. Die Lagerplatte 601 ist im Vergleich zu der von Figur 2 alternativ ausgebildet. Die Lagerplatte 601 ist permeabel für Druckluft ausgestaltet, so daß keine Bohrungen (vergleiche Bohrung 71 bei Figur 2) notwendig sind, um Druckluft in den Lagerspalt des Axiallagers hineinzuleiten. Damit die Luft beim Durchtritt durch die Lagerplatte nicht zu sehr gedrosselt wird, ist von der dem Schaft abgewandten Seite der Lagerplatte 601 diese vorteilhaft mit Bohrungen 605 versehen, so daß die Druckluft näher an die Lauffläche 610 der Lagerplatte 601 geführt wird. Die Luft muß nicht die gesamte axiale Länge der Lagerplatte 601 durchströmen. In den Lagerspalt kommt dadurch genügend Druckluft. Durch die spezielle Ausbildung der Lagerplatte 601 mit den in axialer Richtung verlaufenden Bohrungen 605 wird erreicht, daß bei dieser Ausführungsform vorteilhaft auf eine Drosselvorrichtung, wie dies bei Figur 2 erforderlich ist, verzichtet werden kann.

Die Lagerplatte 601 bei Figur 3 ist mit zwei Verschleißanzeigen 9 ausgestaltet, wobei die eine als Sacklochbohrung 91, wie bei Figur 2 ausgestaltet ist und die andere in Form eines Ansatzes 93. Der Ansatz 93 trägt die Lauffläche 610 und besitzt einen geringeren Durchmesser als der übrige Teil der Lagerplatte 601. Dadurch wird erreicht, daß bei einer Sichtkontrolle bei einem noch nicht verschlissenen Axiallager der Absatz zwischen dem Ansatz 93 und dem übrigen Teil der Lagerplatte 601 sichtbar ist. Tritt nun Verschleiß an der Lagerplatte 601 auf, wird der Ansatz 93 vom Rotorschaft abgetragen, bis der Durchmesserübergang zum übrigen Teil der Lagerplatte 601 verschwunden ist. Dadurch wird der Bedienperson der Maschine signalisiert, daß das Axiallager an der betreffenden Spinnstelle auszutauschen ist. Eine Ausgestaltung der Lagerung mit zwei verschiedenen Verschleißanzeigen ist nicht unbedingt erforderlich. Eine allein ist ansich ausreichend.

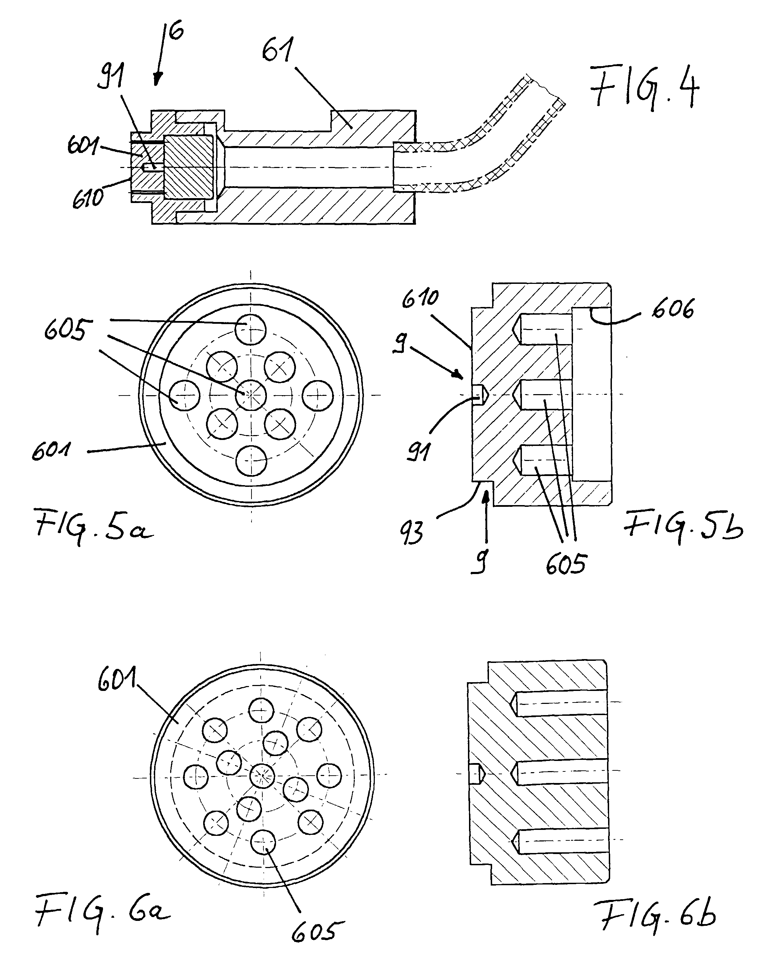

Figur 4 zeigt ein Axiallager 6 ähnlich dem von Figur 2. Lediglich die Sacklochbohrung 91 ist von der der Lauffläche 610 abgewandten Seite in die Lagerplatte 601 eingebracht. Dies bedeutet, daß bei Verschleiß der Lauffläche 610 die Sacklochbohrung 91 freigelegt und für die Wartungsperson erkennbar wird. Dadurch wird signalisiert, daß das Axiallager ausgetauscht werden muß, weil die Verschleißgrenze erreicht ist. Die Sacklochbohrung 91 ist entsprechend tief in die Lagerplatte 601 eingebracht, so daß ursprünglich zwischen dem Ende der Sacklochbohrung und der Lauffläche 610 gerade so viel Material vorhanden ist, wie durch Verschleiß abgetragen werden kann, ohne daß die Lagerung des Spinnrotors Schaden nimmt.

Figur 5a zeigt die Lagerplatte 601 von Figur 3 in der Draufsicht auf die der Lauffläche 610 abgewandten Seite. Die Bohrungen 605, mit deren Hilfe die Druckluft vorteilhafterweise tief in die Lagerplatte 601 eingebracht werden kann, sind in dieser Ansicht in der Draufsicht erkennbar. Im vorliegenden Fall handelt es sich um neun Bohrungen, wobei jeweils vier auf einer Kreislinie in gleichem Abstand angeordnet sind. Die neunte Bohrung befindet sich im Zentrum der Platte und ist koaxial mit der Sacklochbohrung 91 (siehe Figur 3) angeordnet. Durch die Ausgestaltung der Lagerplatte 601 mit den Bohrungen 605 kann die Lagerplatte mechanisch besonders stabil ausgebildet werden, wobei gleichzeitig dafür gesorgt wird, daß genügend Luft die Lagerplatte durchströmen kann. Auf eine gesonderte Drossel kann verzichtet werden.

Figur 5b zeigt die linke Seitenansicht der Lagerplatte 601 von Figur 5a im Schnitt. Die Lauffläche 610 besitzt zentrisch eine Verschleißanzeige 9, die als Sacklochbohrung 91 ausgestaltet ist. Ebenso ist der Ansatz 93, der eine zweite Verschleißanzeige 9 bildet, dargestellt. Die Bohrungen 605 in der Lagerplatte 601 gehen an ihrem der Lagerfläche 610 gegenüberliegenden Ende in eine Ausnehmung 606 der Lagerplatte über. Dadurch ist es möglich, die Fertigung der Lagerplatte 601 zu erleichtern, da die Bohrungen 605 leichter herzustellen sind.

Figur 6a zeigt eine Lagerplatte 601 von der der Lauffläche 610 abgewandten Seite. Bei dieser sind die Bohrungen 605 kleiner ausgebildet und in ihrer Anzahl weit höher, als bei Figur 5a. Dadurch kann eine bessere und gleichmäßigere Luftverteilung im Lagerspalt des Axiallagers erreicht werden. Figur 6b zeigt die linke Seitenansicht von Figur 6a im Schnitt.

## Patentansprüche

1. Offenend-Spinnvorrichtung mit einem Spinnrotor, auf den eine axial wirkende Kraft ausgeübt wird, mit einem aerostatischen Axiallager, an dem sich der Spinnrotor axial abstützt, wobei die Lagerplatte des Axiallagers aus einem verschleißfähigen Werkstoff besteht, mit dem die Lagerfläche des Spinnrotors zusammenarbeitet, und die Lagerplatte mit einem Anschluß für Druckluft in Verbindung steht, und über die Lagerplatte die Druckluft in den Lagerspalt zwischen Lagerplatte und Spinnrotor gelangt, dadurch gekennzeichnet, daß an der Lagerplatte (601) des Axiallagers (6) eine Verschleißanzeige (9, 91, 93) angebracht ist.

2. Offenend-Spinnvorrichtung nach Anspruch 1, dadurch gekennzeichnet, daß die Verschleißanzeige (9, 91, 93) in die Lauffläche integriert ist.

3. Offenend-Spinnvorrichtung nach Anspruch 2, dadurch gekennzeichnet, daß die Verschleißanzeige (9, 91) in Form einer Bohrung (91) in der Lagerplatte ausgebildet ist.

4. Offenend-Spinnvorrichtung nach Anspruch 3, dadurch gekennzeichnet, daß die Bohrung eine Sacklochbohrung (91) ist, deren geschlossenes Ende dem mit der Lagerplatte (601) zusammenarbeitenden Spinnrotor (1) zugewandt ist.

5. Offenend-Spinnvorrichtung nach Anspruch 3, dadurch gekennzeichnet, daß die Bohrung eine Sacklochbohrung (91) ist, deren offenes Ende dem mit der Lagerplatte (601) zusammenarbeitenden Spinnrotor (1) zugewandt ist.

6. Offenend-Spinnvorrichtung nach Anspruch 5, dadurch gekennzeichnet, daß die Sacklochbohrung (91) eine vorgegebene Tiefe besitzt, deren axiale Länge dem in axialer Richtung zugelassenen Verschleiß der Lagerplatte (601) entspricht.

7. Offenend-Spinnvorrichtung nach Anspruch 4, dadurch gekennzeichnet, daß das geschlossene Ende der Sacklochbohrung (91) einen Abstand von der Lauffläche (610) der Lagerplatte (601) hat, der dem zulässigen Verschleiß der Lagerplatte (601) entspricht.

8. Offenend-Spinnvorrichtung nach einem oder mehreren der Ansprüche 3 bis 7, dadurch gekennzeichnet, daß der Durchmesser der Bohrung (91) zwischen 0,5 mm und 1,5 mm beträgt.

9. Offenend-Spinnvorrichtung nach einem oder mehreren der Ansprüche 1 bis 8, dadurch gekennzeichnet, daß die Verschleißanzeige (9) in Form eines Ansatzes (93) ausgebildet ist, dessen dem Spinnrotor (1) zugewandte Seite mit diesem zusammenarbeitet, der Ansatz (93) in axialer Richtung eine vorgegebene Länge besitzt und der Ansatz (93) einen Durchmesser besitzt, der kleiner als der Teil des Axiallagers (6) ist, auf dem der Ansatz (93) angeordnet ist.

10. Offenend-Spinnvorrichtung nach einem oder mehreren der Ansprüche 1 bis 9, dadurch gekennzeichnet, daß die Lagerplatte (601) eine axiale Dicke von mehr als 2 mm besitzt.

11. Offenend-Spinnvorrichtung nach Anspruch 10, dadurch gekennzeichnet, daß die axiale Dicke zwischen 3,5 mm und 5 mm beträgt.

12. Offenend-Spinnvorrichtung nach einem oder mehreren der Ansprüche 1 bis 11, dadurch gekennzeichnet, daß die Lagerplatte (601) zum Zwecke des Durchtritts der Druckluft permeabel ausgebildet ist.

13. Offenend-Spinnvorrichtung nach Anspruch 12, dadurch gekennzeichnet, daß die Lagerplatte (601) als Drosselvorrichtung für die Druckluft ausgebildet ist.

14. Offenend-Spinnvorrichtung nach einem oder mehreren der Ansprüche 1 bis 13, dadurch gekennzeichnet, daß die Lagerplatte (601) mit Bohrungen (605) versehen ist, die auf der dem Spinnrotor (1) abgewandten Seite angeordnet sind, die Bohrungen (605) wenigstens teilweise nicht bis in die Lauffläche (610) hineinreichen, und die Bohrungen (605) mit dem Anschluß (62) für die Druckluft in Verbindung stehen.

## Claims

1. Open-end spinning device with a spinning rotor upon which an axial force is exerted, with an aerostatic axial bearing on which the spinning rotor bears axially, whereby the bearing plate of the axial bearing is made of a wearable material with which the bearing surface of the spinning rotor interacts, and whereby the bearing plate is connected to a compressed air connection and the compressed air is conveyed via the bearing plate into the bearing gap between the bearing plate and the spinning rotor, characterised in that a wear indicator (9, 91, 93) is installed on the bearing plate (601) of the axial bearing (6).

2. Open-end spinning device as in claim 1, characterised in that the wear indicator (9, 91, 93) is integrated into the running surface.

3. Open-end spinning device as in claim 2, characterised in that the bearing indicator (9, 91) is made in form of a bore (91) in the bearing plate.

4. Open-end spinning device as in claim 3, characterised in that the bore is a blind bore (91) the closed end of which is towards the spinning rotor (1) interacting with the bearing plate (601).

5. Open-end spinning device as in claim 3, characterised in that the bore is a blind bore (91) the open end of which is towards the spinning rotor (1) interacting with the bearing plate (601).

6. Open-end spinning device as in claim 5, characterised in that the blind bore (91) has a predetermined depth, the axial length of which is equal to the wear of the bearing plate (601) admissible in axial direction.

7. Open-end spinning device as in claim 4, characterised in that the closed end of the blind bore (91) is at a distance from the running surface (610) of the bearing plate (601) equal to the admissible wear of said bearing plate (601).

8. Open-end spinning device as in one or several of the claims 3 to 7, characterised in that the diameter of the bore (91) measures between 0.5 and 1.5 mm.

9. Open-end spinning device as in one or several of the claims 1 to 8, characterised in that the wear indicator (9) is in form of an extension (93) the side of which towards the spinning rotor (1) interacts with same, in that the extension (93) has a predetermined length in axial direction and in that the extension (93) has a diameter which is less than the portion of the axial bearing (6) on which the extension (93) is provided.

10. Open-end spinning device as in one or several of the claims 1 to 9, characterised in that the bearing plate (601) has an axial thickness of more than 2 mm.

11. Open-end spinning device as in claim 10, characterised in that the axial thickness is between 3.5 and 5 mm.

12. Open-end spinning device as in one or several of the claims 1 to 11, characterised in that the bearing plate (601) is permeable to allow the compressed air to pass.

13. Open-end spinning device as in claim 12, characterised in that the bearing plate (601) is made in form of a choke for the compressed air.

14. Open-end spinning device as in one or several of the claims 1 to 13, characterised in that the bearing plate (601) is provided with bores (605) which are located on the side away from the spinning rotor (1), in that the bores (605) at least in part do not reach as far as into the running surface (610) and in that the bores (605) are connected to the connection (62) for compressed air.

## Revendications

1. Dispositif de filature à fibres libérées comprenant un rotor de filature sur lequel une force agissant axialement est exercée, ainsi qu'un palier axial aérostatique sur lequel le rotor de filature prend appui, la plaque d'appui du palier axial consistant en un matériau qui résiste à l'usure et avec lequel la surface d'appui coopère, et la plaque d'appui étant en liaison avec un branchement pour de l'air comprimé et l'air comprimé parvenant dans la fente du palier, située entre la plaque d'appui et le rotor de filature, en passant par la plaque d'appui, caractérisé en ce que sur la plaque d'appui (601) un indice (9, 91, 93) de l'usure est prévu.

2. Dispositif de filature à fibres libérées selon la revendication 1, caractérisé en ce que l'indice (9, 91, 93) de l'usure est intégré dans la surface de roulement

3. Dispositif de filature à fibres libérées selon la revendication 2, caractérisé en ce que l'indice (9, 91) d'usure est réalisé sous forme d'un alésage (91) dans la plaque d'appui.

4. Dispositif de filature à fibres libérées selon la revendication 3, caractérisé en ce que l'alésage est un trou borgne (91) dont l'extrémité fermée est orientée vers le rotor (1) de filature coopérant avec la plaque d'appui (601).

5. Dispositif de filature à fibres libérées selon la revendication 3, caractérisé en ce que l'alésage est un trou borgne (91) dont l'extrémité ouverte est orientée vers le rotor (1) de filature coopérant avec la plaque d'appui (601).

6. Dispositif de filature à fibres libérées selon la revendication 5, caractérisé en ce que le trou borgne (91) présente une profondeur prédéterminée dont la longueur axiale correspond à l'usure admise en sens axial de la plaque d'appui (601).

7. Dispositif de filature à fibres libérées selon la revendication 4, caractérisé en ce que l'extrémité fermée du trou borgne (91) présente une distance par rapport à la surface de roulement (610) de la plaque d'appui (601) qui correspond à l'usure admise de la plaque d'appui (601).

8. Dispositif de filature à fibres libérées selon l'une ou plusieurs des revendications 3 à 7, caractérisé en ce que le diamètre de l'alésage (91) est compris entre 0,5 mm et 1,5 mm.

9. Dispositif de filature à fibres libérées selon l'une ou plusieurs des revendications 1 à 8, caractérisé en ce que l'indice d'usure (9) est conçu en forme d'une saillie (93) dont le côté orienté vers le rotor de filature (1) coopère avec celui-ci, la saillie (93) présentant, en sens axial, une longueur prédéterminée et un diamètre qui est plus petit que la partie du palier axial (6) sur lequel la saillie (93) est disposée.

10. Dispositif de filature à fibres libérées selon l'une ou plusieurs des revendications 1 à 9, caractérisé en ce que la plaque d'appui (601) présente une épaisseur axiale de plus de 2 mm.

11. Dispositif de filature à fibres libérées selon la revendication 10, caractérisé en ce que l'épaisseur axiale et comprise entre 3,5 mm et 5 mm.

12. Dispositif de filature à fibres libérées selon l'une ou plusieurs des revendications 1 à 11, caractérisé en ce que la plaque d'appui (601) est conçue de façon perméable pour permettre le passage de l'air comprimé.

13. Dispositif de filature à fibres libérées selon la revendication 12, caractérisé en ce que la plaque d'appui (601) est conçue comme dispositif d'étranglement de l'air comprimé.

14. Dispositif de filature à fibres libérées selon l'une ou plusieurs des revendications 1 à 13, caractérisé en ce que la plaque d'appui (601) est pourvue d'alésages (605) qui sont disposés sur le côté opposé au rotor de filature (1); en ce que les alésages (605) ne s'étendent, au moins partiellement, pas jusqu'à la surface de roulement (610) et en ce que les alésages (605) sont en liaison avec le branchement (62) de l'air comprimé.
